Europäisches Patentamt

European Patent Office

Office européen des brevets

(11) Publication number: **0 336 024**
**A1**

# (12) EUROPEAN PATENT APPLICATION

(21) Application number: 88302774.0

(51) Int. Cl.⁴: **B32B 27/32**

(22) Date of filing: 29.03.88

(43) Date of publication of application:
11.10.89 Bulletin 89/41

(84) Designated Contracting States:
AT BE CH DE ES FR GB GR IT LI LU NL SE

(71) Applicant: MOBIL OIL CORPORATION
150 East 42nd Street
New York New York 10017(US)

(72) Inventor: Park, Hee Chung
8 Cedarwood Circle
Pittsford New York 14534(US)

(74) Representative: Colmer, Stephen Gary
Patent Department c/o Mobil Services
Company Limited Mobil Court 3 Clements
Inn
London WC2A 2EB(GB)

(54) Heat sealable mutilayer film and method of making same.

(57) An oriented polyolefin film structure having a base layer of, for example, polypropylene, and wherein at least one skin layer is comprised of a copolymer or terpolymer and at least one skin layer is comprised of a polyamide, polyester or polycarbonate polymer whereby said film structure has improved and broad heat sealability.

EP 0 336 024 A1

# HEAT SEALABLE MULTILAYER FILM AND METHOD OF MAKING SAME

This invention relates to production of broad heat sealable oriented polypropylene (OPP) film with excellent heat sealability and surface properties and to a method of making same.

In certain types of packaging, for example, foods such as cookies and the like, it is common to employ a multilayer film having two or more polymeric layers wherein one of the layers is known to be an effective heat seal layer. In the packaging process a supply of such a multilayer film can be shaped into a tube in a vertical and horizontal form, fill and seal machine. Marginal regions of heat seal layer are brought into face to face relationship and heat sealed together. Thereafter the packaging machine automatically forms a heat seal and makes a horizontal severence across the bottom of the bag; the product is dispensed into the open end of the tube and thereafter a second horizontal seal is effected across the tube with a simultaneous severing through the tube to result in a product packaged in a tube, heat sealed at both ends and along one seam at right angles to the end seals. While the food or other product is being dispensed into the package air is also present in the package and thus air assists in protecting and cushioning a product during subsequent shipment of the finished packages.

A multilayered wrapping film described in U.S. Patent No. 4,214,039 discloses a film structure comprising a polyethylene film substrate having a heat sealable vinylidene chloride polymer, in between the polypropylene film and the vinylidene chloride polymer is a primer coat which enhances the bond strength between the polypropylene and the heat sealable vinylidene chloride polymer. This packaging is effective for comparatively small quantities of product. For packaging of comparatively large quantities its seal strength needs to be increased.

U.S. Patent 4,564,558 is directed to an oriented multilayered heat sealable film structure of greater strength comprising a polyolefin film substrate, a layer of a terpolymer of ethylene, propylene and butene, a prime layer on said terpolymer layer and a heat sealable layer on said primer layer.

The packaging industry has been moving toward higher productivity requiring a broad heat sealable film. Also required in the field application is an excellent film surface for lamination and printing processes. This invention, therefore, relates to broad heat sealable film with excellent surface and barrier properties.

In accordance with the present invention an oriented polypropylene film with excellent surface and barrier properties is provided. The film comprises a heat sealable multilayer film structure having (I) a substrate comprising a polyolefin film; (II) a heat sealable layer on at least one surface of (I) consisting essentially of a low temperature melting resin having a low softening point, high seal and hot tack strength and (III) a high surface active layer on at least one surface of (I) selected from high temperature stable polymers. The present invention, therefore, evolves around a three-layer co-extruded base film and the making thereof.

The method of producing the heat sealable multilayered film structures of the present invention comprises: coextruding a substrate comprising a polyolefin film with a layer consisting essentially of a copolymer or terpolymer respectively of ethylene-propylene or ethylene-propylene-butene and the like and a heat sealable layer of a high temperature stable polymer group selected from such as polyamides, polyesters and polycarbonates.

The layers may be described as A layer, B layer and C layer. B is the substrate or core layer, A and C are the outer or skin layers. The key requirements are that the A layer has a low softening point, high seal and hot tack strengths; the B layer which is low cost, has excellent use and functionality and the C layer contains a high temperature stable polymer group which not only provides high thermal stability but also imparts to the film desirable surface properties making its chemical nature highly suitable for lamination and printing operations.

The three layer coextruded composite is cast on a chill roll/water bath quenching unit and reheated on heated machine direction orientation rolls for machine direction orientation. The sticking and/or marking on the machine direction rolls for softer heat seal layer can be avoided by cooling and heating, the alternate machine direction orientation (MDO) rolls facing A layer and C layer, respectively. The machine direction (MD) oriented web is then subjected to transverse direction (TD) orientation, treated when needed and wound on the winder.

The polyolefins contemplated as the substrate or core layer material of the present film structure include polyethylene, polypropylene, polybutene and copolymers and blends thereof. Particularly preferred is an isotactic polypropylene homopolymer having an isotacticity greater than 90. It is preferred that the polypropylene have a melt flow rate of from 1.5 to 8 g/10 minutes.

As stated hereinabove the skin layer or layer A consists of low temperature melting resins. Preferred are ethylene/propylene random copolymers and ethylene/propylene/butene terpolymer and blends thereof in any suitable proportions.

Ethylene-propylene random copolymer contemplated for use herein are conveniently formed by the simultaneous polymerization of the respective monomers. Effective formation of a random copolymer of ethylene and propylene is accomplished when the ethylene is present simultaneously with the propylene in an amount sufficient to result in from 2.5 to 8% and preferably 3-6% by weight of ethylene in the resulting copolymer. This system is characterized by random placement of the respective monomer units along the polymer chain. This is in contrast with a block copolymer of ethylene and propylene formed by sequential polymerization of the respective monomers. The feeding of the monomers in forming a block copolymer is controlled so that the monomer employed in one stage of the sequential polymerization is not added until the monomer employed in the preceding stage has been at least substantially consumed thereby ensuring that the concentration of the monomer remaining from that preceding stage is sufficiently low to prevent formation of an excessive proportion of soluble random copolymer. The terpolymers [ethylene-propylene-butene (preferably butene-1)] can be made by any convenient method known to the art, e.g., Ziegler-Natta catalysis, and generally have an ethylene content of from 0.5 to 8%, preferably 3-6 wt.%, and a butene content of from 0.5-6 wt.% and preferably 1.5-4.5%. The terpolymers can have a melt flow rate at $230^\circ$ C ($446^\circ$ F) of from 3 to 15 and preferably 5 to 10.

Layer C consists of highly surface active and high temperature stable polymer groups including polyamide, polyethylene terephthalate (PET) and polycarbonate prepared in general by polycondensation processes. PET is the product of a condensation reaction between ethylene glycol and ethylene terephthalic acid. Polycarbonate may be prepared from aliphatic and cycloaliphatic diols by transesterification with diethyl carbonate. The polymer groups, however, may be prepared in any convenient manner known to the art. These groups, in particular, have high surface tension so they can be coated, printed, laminated or metallized without corona discharge treatment. These added benefits make the present invention more versatile in the flexible packaging applications.

In preparing the multilayer structure of the present invention the polypropylene (B layer) and layers A and C are coextruded so that layer A has a thickness from 3 to 20 percent of the total thickness of the three layers; layer B has a thickness of from 60 to 90 percent of the total thickness, and layer C has a thickness of from 7 to 20 percent of the total thickness.

It has been found that some of the high temperature stable polymer groups contemplated herein do not adhere well to polyolefin film surfaces even when the latter have been subjected to well known pretreatment operations such as, for example, treatment by corona discharge, flame or oxidizing chemicals. Even in the case of coextrusion when both surfaces contact intimately at melt state, melt diffusion through interface is not enough to obtain a strong bond. It has also been found that the use of certain additives or adhesive resins between the polypropylene and high temperature stable layer provides an unexpectedly high level of adherence. As a result, such layers adhere to an adjacent layer with unexpectedly high tenacity. Optionally, therefore, the film structure may include suitable additive or adhesive material It has been further found that in the case of combining the web outside of the die selected primers intermediate between the C and the B layers provide an unexpectedly high level of adherence.

The system contemplated for the formation of the multi-layer packaging material of the present invention involves the use of two layers applied in succession or simultaneously to the surface of the chosen substrate layer. For example, when the substrate layer is polypropylene, one or both surfaces of the polypropylene film will have applied thereto the following layers progressing in order outwardly from the surface of the polypropylene: A coextruded layer of terpolymer, an appropriate primer material to create a bond between the terpolymer and a surface heat seal layer, and the heat seal layer itself.

Examples of primer materials include those defined in U.K. Pat. No. 1,134,876 which discloses a primer produced by condensing a monoaldehyde with an interpolymer of acrylamide or methacrylamide and at least one other unsaturated monomer; and those defined in U.S. Pat. No. 1,174,328 which discloses a material resulting from condensing aminoaldehyde with acrylamide or methacrylamide and subsequently interpolymerizing the condensation product with at least one other unsaturated monomer in the presence of a $C_1$-$C_6$ alkanol. A preferred primer coating resin of this type comprises a copolymer containing up to 90% by weight of styrene, up to 80% by weight of an alkyl acrylate, up to 15% by weight of methacrylic acid and 5% to 25% by weight of acrylamide which has been condensed with a solution of formaldehyde in n-butanol containing from 0.2 to 3 equivalents of formaldehyde for each amide group in the copolymer. Another primer resin of this type is a 50% solid solution of a copolymer resin containing 38.5 parts of styrene, 44 parts of ethyl acrylate, 2.5 parts of methacrylic acid and 15 parts of acrylamide which has been condensed with 5.2 parts of formaldehyde in n-butanol.

The films according to the following examples, as representative of the present invention, have a core of polypropylene and the defined skin layer blends on both sides thereof. It is understood, however, that

EP 0 336 024 A1

structures with but a single skin or structures with more than two skins may be formed.

EXAMPLE 1

A polypropylene homopolymer of comparatively high stereoregularity (MP 165°C and a melt flow rate of 4.5) was melted and coextruded with an ethylene-propylene-buten-1 terpolymer (MP 126°C and a melt flow rate of 6) forming a three-layer coextruded structure. The coextrudate was then quenched, reheated and oriented biaxially, five times in the machine direction and nine times in the transverse direction. Subsequently, one surface of the skin layers was corona treated in a conventional manner. The total guage of the structure was 0.03 mm (1.25 x $10^{-3}$ inch) with a 0.0015 mm (0.06 x $10^{-3}$ inch) each skin layer encapsulating the core layer (ABA structure).

Data showing heat sealability and receptivity for water-based inks and adhesions are summarized in the accompanying Table. The heat seal range measured between initial seal activation temperature to film distortion is good at about 16°C (60°F). Wet-out for water-based inks and adhesives are good. The adhesion strength, however, is not sufficient.

Example 2

The procedure of Example 1 was substantially repeated except that the third layer (C) comprised the same polypropylene homopolymer employed in the core (B) layer. The thickness of the heat seal layer (A) was about 0.0015 mm (0.06 x $10^{-3}$ inch) of the total guage of 0.03 mm (1.25 x $10^{-3}$ inch) (ABB structure).

Good sealability is shown. However, wet-out and adhesion for water-based inks and adhesives are unacceptable for converting the packaging operations.

Example 3

The procedure of Example 2 was followed except that the third layer (C) comprised of a PET (polyethylene terephthalate) (MP 245°C and an intrinsic viscosity of 0.74), condensation polymer produced from dimethyl terephthalate and ethylene glycol. The total guage of the structure was 0.0023 mm (1.25 x $10^{-3}$ inch), the first (heat seal layer A) and second (PET layer C) skins comprising 0.0015 mm and 0.0064 mm (0.06 x $10^{-3}$ and 0.25 x $10^{-3}$ inch) respectively (ABC structure).

As shown in the Table, distortion temperature is considerably higher than those in the previous examples. Consequently, the heat seal range has been broadened significantly permitting the packaging operation at much higher speeds.

TABLE

| Crimp Seal Strength (20 psi, 3/4 sec) (138 kPa, 3/4 sec) A layer/A layer | | Example 1 | Example 2 | Example 3 |
|---|---|---|---|---|
| 104°C | (220°F) | 313 | 395 | 345 |
| 116°C | (240) | 535 | 585 | 643 |
| 127°C | (260) | 510 | 488 | 540 |
| 138°C | (280) | 528 | 470 | 585 |
| 149°C | (300) | Severe Distortion | Distortion | 605 |
| 160°C | (320) | | | 590 |
| 171°C | (340) | | | Distortion |
| Receptivity of layer (C) for water-based inks and adhesives | | Good wet-out and fair adhesion | Poor wet out and poor adhesion | Excellent wet-out and good adhesion |

As the above indicated data clearly shows, the films in accordance with this invention have excellent broad

4

heat sealability and surface properties.

Although the present invention has been described with preferred embodiments, it is to be understood that modifications and variations may be resorted to, without departing from the spirit and scope of this invention, as those skilled in the art will readily understand. Such modifications and variations are considered to be within the purview and scope of the appended claims.

## Claims

1. A broad heat sealable multilayer structure comprising:
   (a) a heat sealable layer consisting essentially of a low temperature melting resin having a low softening point, high seal and hot tack strength on at least one surface;
   (b) a substrate comprising a polyolefin; and
   (c) a surface active layer on at least one surface of (b) selected from high temperature stable polymers.

2. The structure of claim 1 wherein said polyolefin comprises homopolymer polypropylene.

3. The structure of claim 1 wherein said low temperature melting resin (a) is selected from copolymers, terpolymers and mixtures thereof.

4. The structure of claim 3 wherein said resin is selected from the group consisting of ethylene/propylene random copolymers and ethylene/propylene/butene terpolymers.

5. The structure of claim 1 wherein the high temperature polymer (c) is selected from polymers having polyamide, polyethylene terphthalate or polycarbonate groups.

6. The structure of claim 1 wherein (a) and (c) are coextruded with (b).

7. The structure of claim 1 having an orientation greater than 4 times.

8. The structure of claim 2 wherein (a) is an ethylene/propylene/butene-1 terpolymer and (c) is a polyethylene terephthalate polymer.

9. The film structure of claim 1 wherein (a) has a thickness varying from about 3 to about 20 wt. % of the layered film structure and (c) has a thickness varying from about 7 to about 20 wt. % of the layered film structure.

10. A method of making a broad heat sealable oriented film structure comprising: applying to one surface to one surface of a polyolefin film a layer comprising a low temperature melting resin having a low softening point, high seal and high hot tack strength and applying to the other surface of said polyolefin a higher temperature stable polymer and bringing the combination to a stretch-orientable condition and stretching it in at least one direction.

11. The method of claim 9 wherein the low temperature resin and the high temperature stable polymer are coextruded with the polyolefin subjstrate.

12. The method of claim 10 wherein said low temperature melting, high seal, high hot tack strength resin is selected from ethylene, propylene random copolymers or terpolymers and said high temperature stable resin is selected from polyamides, polyesters or polycarbonate polymers.

13. The method of claim 12 wherein an ethylene/propylene/butene-1 terpolymer is applied to one surface of said polyolefin film and polyethylene terephthalate polymer is applied to the other surface of said polyefin film.

14. The method of claim 1 wherein said polyolefin is polypropylene.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 220 620 (HOECHST AG) * Claims 1,3-5; column 4, lines 8-32 * --- | 1-7,11-14 | B 32 B 27/32 |
| X | GB-A-2 119 707 (FUJI PHOTO FILM CO. LTD) * Page 1, lines 54-58; page 2, lines 8-11,24-27,41-43,47-52; page 3, line 53 - page 4, line 5 * | 1-3,5,6 | |
| A | --- | 9 | |
| X | US-A-4 309 466 (CHAMPION INTERNATIONAL CORP.) * Column 2, line 61 - column 3, line 12; column 3, lines 21-55; column 3, line 67 - column 4, line 5; column 4, lines 19-22 * --- | 1-3,5 | |
| A | US-A-4 720 420 (HOECHST AG) * Column 2, lines 42-62; column 5, lines 5-9,29-35; column 6, lines 13-16 * --- | 1-4,6-11 | |
| A | US-A-4 384 024 (IMPERIAL CHEM. IND. LTD) * Column 2, lines 14-33; column 3, line 64 - column 4, line 6; column 4, lines 14-20,42-44; column 5, lines 12-20 * ----- | 1-4,6,7,9-11 | TECHNICAL FIELDS SEARCHED (Int. Cl.4) B 32 B |

The present search report has been drawn up for all claims

| Place of search | Date of completion of the search | Examiner |
|---|---|---|
| THE HAGUE | 21-11-1988 | IBARROLA TORRES O.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................

& : member of the same patent family, corresponding document

EPO FORM 1503 03.82 (P0401)